Europäisches Patentamt

**(19)** European Patent Office

Office européen des brevets

(11) Publication number : **0 327 517 B1**

(12) **EUROPEAN PATENT SPECIFICATION**

(45) Date of publication of patent specification :
**15.04.92 Bulletin 92/16**

(51) Int. Cl.⁵ : **G01G 21/00, G01L 1/26**

(21) Application number : **89850013.7**

(22) Date of filing : **18.01.89**

(54) **Load transmitting device for electromechanical measurement transducers.**

(30) Priority : **02.02.88 SE 8800313**

(43) Date of publication of application :
**09.08.89 Bulletin 89/32**

(45) Publication of the grant of the patent :
**15.04.92 Bulletin 92/16**

(84) Designated Contracting States :
**DE FR GB NL**

(56) References cited :
**DE-A- 3 235 862**
**DE-B- 2 152 504**

(56) References cited :
**US-A- 3 284 749**
**US-A- 3 490 554**
**US-A- 4 619 147**
**US-A- 4 702 329**

(73) Proprietor : **S.E.G. RESISTOR AB**
**Box 76**
**S-162 12 Vällingby (SE)**

(72) Inventor : **Söderholm, Arne**
**Furusangsvägen 7**
**S-161 25 Bromma (SE)**

(74) Representative : **Onn, Thorsten et al**
**AB STOCKHOLMS PATENTBYRA Box 3129**
**S-103 62 Stockholm (SE)**

EP 0 327 517 B1

Jouve, 18, rue Saint-Denis, 75001 PARIS

## Description

This invention relates to a transmission of the load from a load carrier (container, bridge) to a load measuring transducer and further to the foundation without the influence of disturbing loads. Load measuring transducers are the load sensing means in electromechanical scales, i.e. scales where the load is converted into an electric signal that is a measure of the load.

When using load measuring transducers the measurement of the desired load without the influence of disturbing loads is a central problem. This is due to the fact that the load carrier is subjected to disturbance on account of its deformation of the load that gives rise to changes of both length and angles of the load carrier and, moreover, dimensional changes arise owing to outer influence such as changes in temperature. These transversal movements and angular changes create extra forces and movements actuating the points of support. These consist of the load measuring transducers. In order to eliminate the influence of disturbances attempts have either been made to make the load measuring transducers stiff so that they can transmit these disturbing loads and moments, or else they are made resilient, but in both cases without an erroneous indication arising at the same time. As disturbing loads can exceed substantially the size of the measuring load said solution leads to uneconomical constructions at great loads or to unreliable constructions.

There are a number of known methods for the last-mentioned solution. Resilient transmissions are advantageously made so that they are self-stabilizing, i.e. they tend to enter their starting position. In this way no struts are needed to hold the load carrier in a distinct position.

Examples of such constructions are described in Swedish Patent No. 386 268 where the load measuring transducer is provided with spherical end surfaces with a radius greater than half the height of the load measuring transducer which gives a self-stabilizing effect. Moreover, that device is embodied so that the transversal movements and the angular movements are limited by mechanical stops. Other examples of resilient constructions are described in Swedish Patents 366 116 and 451 891. These constructions are provided with cylindrical oscillating pieces placed above the load measuring transducer and having spherical end surfaces. Errors arising in the load measuring transducers due to their angular changes from the vertical axis at transversal movements of the load carrier are avoided by the last-mentioned constructions. However, with spherical surfaces great mechanical stress concentrations appear in the contact surfaces. If the radii of the spherical surfaces are increased to reduce the stress concentrations the working point of the contact surface of the load measuring means is moved in proportion to the angular change of the oscillating piece or load measuring transducer, errors in measurement arising which certainly (according to one patent) can be used to compensate weaknesses of the load measuring transducer. Therefore the size of the stress concentrations bring restrictions in the size of the resetting force relative to the measuring load. This restriction brings demands on precision when arranging the load carrier on the load measuring transducers and always adjusting works in order that the oscillating means should have a stable vertical starting position.

From DE-A1-3 235 862 is also known a way to reduce the stress concentrations on the contact surface. Oscillating pieces are there inserted at one or both ends of the measuring body. The oscillating pieces and the end surfaces of the measuring body have been given such a form that their contact surfaces are linear and directed perpendicularly to each other at the opposite sides of each of the oscillating pieces. The construction does not provide for any self-stabilizing effect, but is instable to transversal movements of the load carrier. With such an oscillating piece only at one end of the measuring body there is no resiliancy to transversal movements but only to angular changes of the load carrier. Those peculiarities restrict the use of the construction, and there has only been achieved lower stress concentrations than with devices having spherical contact surfaces, which however can be made so that they have a self-stabilizing effect.

It is the object of this invention to provide a self-stabilizing load transmitting device which can be embodied with an optionally great stabilizing degree, with moderate stress concentrations in the contact surfaces and without transversal movements giving rize to angular changes in the load measuring transducers and errors associated therewith. Moreover, the device can also transmit tractive loads. For example, such appear due to wind forces on containers placed outdoors. These properties make the device universal in use and it can be easily mounted below the load carrier as it consists of a finished unit - transmitting device together with load measuring transducers.

The load transmitting device of the invention has a load measuring body with plane parallel end planes. The deformation of the load measuring body which is the measure of the load to which it is exposed can also be measured in an inductive or resistive way and its embodiment between the end planes is designed all according to the measuring principle used. A load transmitting body is in contact with each end plane. They are formed with the same geometry so that the transmitting body permits transversal movements and angular changes in one horizontal direction at one end of the measuring body while the other transmitting body is plane in this direction. The latter body is turned perpendicularly to the previous one in the horizontal plane and it permits in turn movements and angular changes in the perpendiculai direction of the previous body. In this way the measurig body will retain its vertical position. The measuring body is attacked by an extended load transversely across the end planes. In this way the specific expression in the contact surfaces will be considerably lower than if the load attacks on points. Therefore the radii of the transmitting units can be selected so that a correspondingly greater self-resetting force will arise.

In order to fix the positions of the transmitting units the contact surfaces are provided with holes for pins or balls capable of transmitting the size of the arising resetting lateral force. Moreover, it is suitable to supplement the device with foundation plates. These can be provided with distance screws and washers with holes adapted to grooves in the end sections of the measuring body so that the two foundation plates are connected via the load measuring body. In this way the device can also transmit a tractive force.

The device is cheap to manufacture if numerically controlled machines are available which is a condition for providing simply curved surfaces such as arcs without much manual handling (filing between milled coordinate steps).

The invention is described in Figs. 1-10, in which:
Fig. 1 shows a perspective view of the essential design of the device according to the invention;
Fig. 2 shows a side view of the device seen in the Z-axis direction of Fig. 1;
Fig. 3 shows one embodiment of a guiding means of Fig. 2;
Fig. 4 shows another embodiment of the guiding means in Fig. 2;
Fig. 5 shows a schematic end view of the upper oscillating piece according to arrows 25 in Fig. 2;
Fig. 6 shows a view similar to that shown in Fig. 5, but with the oscillating piece in one of its extreme positions;
Fig. 7 shows a partially broken perspective view of a complete force transmitting device according to the invention;
Fig. 8 shows a section according to the arrows 49 in Fig. 7;
Fig. 9 shows a side view of one of the screws holding the device in Fig. 7 together; and
Fig. 10 shows a view similar to that in Fig. 9, but with a positioning nut displaced to another position on the screw.

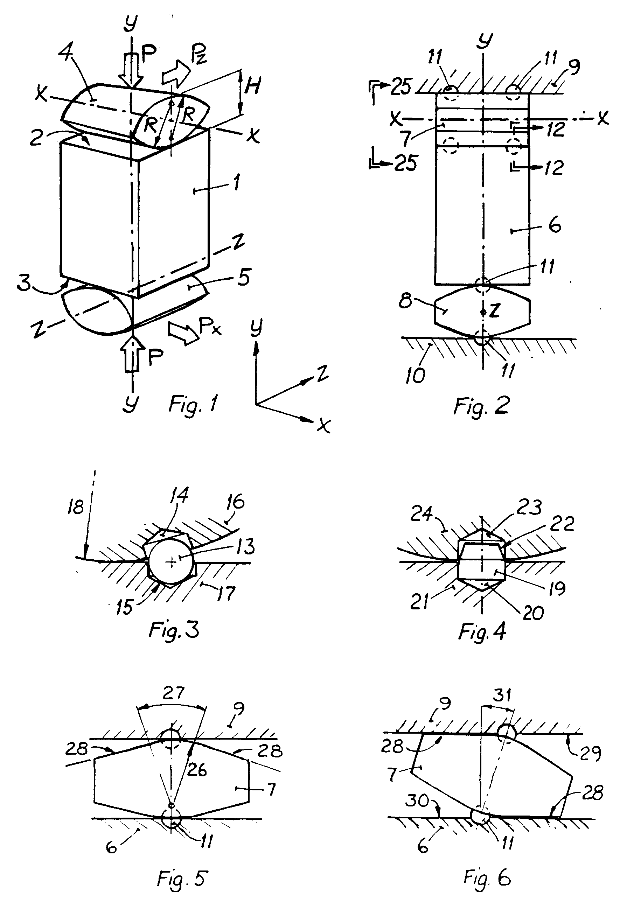

Fig. 1 shows the essential design of the device. The measuring body 1 shown here with a rectangular cross-section has plane parallel end planes 2 and 3 and has its longitudinal axis along the y-axis in a system of coordinates with x, y and z axes. Transmitting units in the form of oscillating pieces 4 and 5 rest against the end planes. The load P and its counterforce attack via plane surfaces (not shown) the opposite side of said oscillating pieces 4 and 5.

The oscillating pieces consist of lying cylinders, the surfaces of which have a simply curved, spherical form with the radii R. The radii are greater than half the height H, thanks to which the oscillating piece will enter a stable position against a plane support. Is one plane from which the load P attacks is moved in the direction z the radial surfaces of the oscillating piece will roll and turn the oscillating piece around the x-axis. At this slanted position the distance between the planes will increase beyond the distance H and the increase in height corresponds to a work giving a horizontal lateral force Pz of a direction tending to turn the oscillating piece back to its original position. The corresponding force will be zero in circular cylinders. The lateral force Pz also tends to turn the load measuring body around the x-axis. The oscillating piece 5 placed at the other end of the load measuring body has however its longitudinal axis turned at right angles to the longitudinal axis of the oscillating piece 4, i.e. along the z-axis in the system of coordinates. The transversal circular cylinder surface is in contact along its length with the lower end plane of the measuring body and absorbs the moment from the force Pz. Thus, no turning of the measuring body around the x-axis will arise. Is the lower plane displaced in x-direction, via which the counterforce P attacks, the oscillating piece 5 will instead be turned around the z-axis, a corresponding resetting force Px will arise and the moment tending to turn the load measuring body around the z-axis is taken up by the transversal upper oscillating piece 4. If the attacking planes, via which the force P attacks, are not parallel, the oscillating pieces will yield for the angular changes in a correponding way. The contact surface, over which the load is introduced into the load measuring body has the form of a line across the end plane of the measuring body and therefore the specific surface pressure will be lower than in such embodiments where the attacking surfaces have a spherical form. This gives a possibility for dimensioning the oscillating pieces so that a considerably greater resetting force is achieved than when using spherical surfaces. The advantage of this is that the position tolerances in mounting of the measuring transducers below the load carrier are less critical and that horizontal disturbing forces will not dis place the load carrier in such a high degree. The natural oscillation frequency after transient forces will be higher and are damped out faster by this.

As the horizontal forces (Pz and Px) can be permitted to be relatively high the neutral positions of the oscillating pieces, i.e. the position where no horizontal movements of angular changes of the attacking planes are present, can be fixed so that a rolling friction at oscillations does not bring sliding over the surface planes. How this can be embodied is shown in Fig. 2 which is a view of the device in the direction of the z-axis. The measuring body 6 is shown in a position between the oscillating pieces 7 and 8 and the underside 9 of the load carrier and the support 10, respectively. Guiding means in the form of balls placed in fitting recesses in the contact planes are inserted at the end plane of the measuring body. Figs. 3 and 4 show some embodiments of the guiding means in section 12-12 on Fig. 2. Fig. 3 shows a ball 13 placed in circular recesses 14 and 15 in the respective body 16 and 17. The body 16 is the oscillating piece in a turned position with the radius 18. Fig. 4 shows a guiding means in the form a partly conical, circular pin 19 pressed down into a hole 20 in the symmetry plane of the measuring body 21. The upper part of the pin has a conical form with the cone angle 22 adapted so that the opening of the hole 23 in the oscillating piece 24 can be moved freely alongside the pin when the oscillating piece is subjected to a turning force.

One oscillating piece in Fig. 2 is shown in a view 25-25 in Fig. 5. In order that uncontrolled great turnings might arise on the oscillating piece 7 at an extraordinarily great lateral force (Px, Pz) the circular part with the radius 26 can be limited to a desired maximum oscillating angle 27 and the other parts of the cylindrical contact surface can consist of two planes 28 in directions of the tangents calculated from the maximum angle. At the restriction of the oscillation a position according to Fig. 6 will arise where the body 7 abuts the contact surfaces 29 and 30 along the plane parts 28 and will be inclined with the angle value marked 31 in the figure.

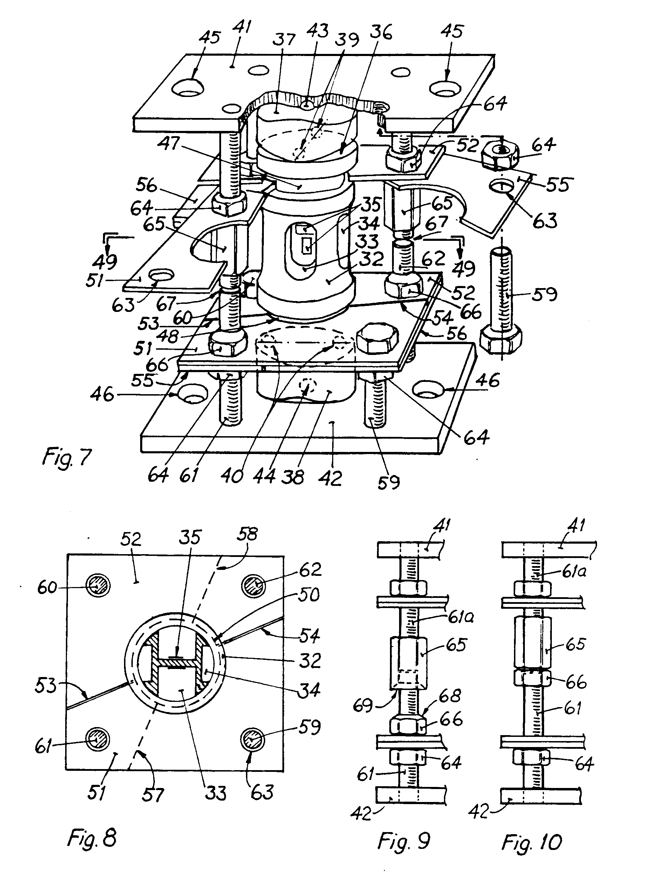

Fig. 7 shows a complete force transmitting device according to the invention. The measuring body 32 is formed here as a substantially circular cylinder. In its central part the measuring body has recesses 33 and 34 formed similarly at opposed sides with the depth of the recesses so selected that the cross-section has the form of a H. The design is apparent from Fig. 8. Strain gauges 35 are placed on the central portion in the bottoms of the deepest recesses 33, of which one is shown. With these connected in a bridge a measure of the load is obtained in known manner. Thanks to the location of the strain gauges 35 close to the centre of the measuring body the influence of disturbing bending movements from horizontal forces will be minimized. In the figure above and below the plane end surfaces 36 of the measuring body the oscillating pieces 37 and 38 are placed. These are formed in a way as shown in Fig. 5 and are guided by a pair of recessed balls 39 on the upper side of the measuring body and a pair of partly shown balls 40 which are turned as to their position 90° relative to the balls 39 on the upper side. The oscillating pieces are supported against foundation plates 41 on the upper side and against 42 on the underside, respectively. For guiding the positions of the oscillating pieces against the plates there are also recessed balls 43 and the partly shown ball 44. The foundation plate 41 has holes 45 for mounting screws of a load carrier not shown in the figure with a plane underside and the plate 42 can be fastened via the holes 46 by means of mounting crews to a support not shown. In order to hold together the device and to give a possibility of taking up occasional tractive loads there is a divisible washer at each end of the load measuring body. In the normal function of the device the washers are fixed to the foundation plates. The washers enclose the recess 47 at the upper end of the measuring body 32 and recesses 48 shown partly in the figure at the lower end of the measuring body. The design of the washers is apparent from Fig. 8 showing a section 49-49 of the device. Each washer of a square form and hole 50 adapted to recess 48 consists of two divided plates. The hole 50 has a diameter greater than the bottom diameter of the recess 48 and adapted to permit a horizontal movement of the measuring body of a desired maximum size. The total thickness of the plates is so adapted to the width of the recess 48 that a certain angular change of the plates may arise without the plates getting into contact with the sides of the recess. The embodiment of the washers appears from Fig. 7 and 8. They partly consist of the members 51 and 52 with the graduation line 53-54 and partly of two identical plates 55 and 56 places below this with the graduation line 57-58. The plates are held together by means of crews 59, 60 and 61, 62 through the holes 63. By an optimum placement of the graduation lines 53-54 and 57-58 the plates can be turned aside for mounting and removal of the load measuring body. It is apparent from Fig. 7 how the washer members are fixed by means of nuts 64 on the sides against the foundation plates 41, 42 and the nuts 65, 66 on the other side of the washers. The screws 59-62 are threaded in the foundation plates and the diagonally placed screws 61, 62 are completely threaded without heads and extend towards the central section of the device with lenghts adapted so that there will be a certain distance 67 between them. In Fig. 7 the plates 51 and 55 of the upper washer are outwardly turned in that one of the drews 59 has been removed and the nuts 65 loosened on the screws 61 and 62. If the lower pair of plates 51 and 56 are turned in a corresponding way towards each their side the measuring body and the oscillating pieces can be taken out of the device. The screws 61, 62 have lengths so adapted that a certain distance 67 will arise. This is kept at a minimum and is desided by permitted angular changes from the horizontal plane of the foundation plates. It is intended by the adjacent screw ends that displacements in the horizontal plane between them will indicate how well the device is aligned. Two other objects of the screw lengths appear from Figs. 9 and 10.

Fig. 9 shows one of the screws 61 placed diagonally, the upper one being designated by 61a in the figure. The nut 65 on screw 61a has been turned to a position where it has entered the thread of the screw 61 and consequently locks the positions of the foundation plates relative to one another. If the diagonally placed nut 65 is turned in the same position, the whole load measuring device is arrested in a correct starting position as to the starting positions of the foundation plates.

Fig. 10 shows the same details as in Fig. 9 but the nut 66, the upper side of which is conical 68 (Fig. 9) is turned upwards to the upper end of screw 61 and the nut 66 having an internal conicity 69 (Fig. 9), is turned towards the nut 65. By holding the nut 66 and turning the nut 65 further downwards the foundation plates 41 and 42 will be removed from each other. If a raising is needed exceeding the play between the thickness of the washers and the width of the recess 47 and 48 the screws 59 and 60 are loosened. Thus, the nuts 65, 66 can be used for withdrawing the foundation plates from one another if the load measuring body and the oscillating pieces are to be mounted or removed without any lift jack being needed. Of course such a one is suitable as a complement if removal must be carried out when a load carrier has a substantially great measuring load on itself at the same time. No encapsulating details have been shown in Fig. 7. An elastic sleave can preferably be placed around the oscillating pieces 37 and 38 which seals between the underside of the foundation plate 41 and the upper side, respectively, of plate 42 and the opposite sides of the washers 51, 52 and 55, 56, respectively. No encapsulating is shown around the central part of the measuring body, either. The encapsulating is assumed to be adapted with respect to the current design of the measuring body which is depending on the measurement principle used.

Besides the embodiment in Figs. 7-10 the foundation and fixing plates may have another form, for example circular instead of rectangular. The number and embodiment of the mounting screws of the fixing plates can also be embodied in another way within the scope of the invention. The invention also comprises a design of the measuring body in very different ways and it need not be massive but can also be made of a plurality of assembled parts, of which the central one, for example, can be a plate laminate fitting a measuring transducer of inductive principle. The central part of the measuring body can also be made with bending springs on which the strain gauges are placed or be formed so that a surface area of the measuring body with shearing stresses is present with strain gauges placed thereon in a suitable way.

## Claims

1. Load transmitting device for electromechanical measurement of forces and weighing, comprising a load measuring body (1) having substantially plane, parallel end planes (2, 3), and a cylindrical transmitting unit (4, 5) at each end plane (2, 3) of the measuring body (1), which units are intended to lead the force and the counterforce into the measuring body (1) and to permit at the same time motion and angular change of the compression load, whereby each transmitting unit consists of a cylindrical body (4, 5) with its longitudinal axis (x-x and z-z, respectively) parallel to the end plane (2, 3) of the measuring body (1), **characterized** in that the end planes of the transmitting units (4, 5), both those forming the contact surfaces against the measuring body (1) and the opposite ones, have a substantially circular, single-curved form with their respective radii (R) greater than the length of half the transmitting unit in the direction of force transmission (y-y) and that the longitudinal axes (x-x and z-z, respectively) of the transmitting units (4, 5) are arranged perpendicularly to each other at each end plane (2, 3) of the measuring body (1).

2. Load transmitting device as claimed in claim 1, **characterized** in that the contact surfaces of the transmitting units (7, 8) and the end planes of the measuring body (6) are provided with guiding means in the form of pins (19) in one surface and holes (20) fitting these in the other surface so that transversal movements (x- and z-direction) and turning around the longitudinal axis (y-direction) of the measuring body are prevented between the transmitting units and the measuring body.

3. Load transmitting device as claimed in claim 1, **characterized** in that the contact surfaces of the transmitting units (7, 8) and the end planes of the measuring body (6) are provided with guiding means in the form of opposite holes (14, 15) in both the surfaces with hole dephts adapted to be filled by one half of a ball-shaped body (13) so that transversal movements (x- and y-direction, respectively) and turning around the longitudinal axis (y-direction) of the measuring body are prevented between the transmitting units and the measuring body.

4. Load transmitting device as claimed in any one of the preceding claims, **characterized** in that the end planes of the transmitting units, both those forming the contact surfaces against the measuring body and the opposite ones, have a single-curved form which is circular along the part of the periphery getting in contact with the opposite surface within the range of the oscillation angle (27) of the transmitting units and that the form is straight (28) in the direction of the tangent towards the sides outside said contact range.

5. Load transmitting device as claimed in any one of the preceding claims, **characterized** in that the transmitting units (37, 38) are maintained in a force transmitting position to foundation plates (41, 42), that these are placed against the contact surfaces of the transmitting units not facing the measuring body (32), that these two contact surfaces have guiding means in the form of pins (22) in one surface and holes (23) in the other surface so that transversal movements (x- and z-direction, respectively) and turning around the longitudinal axis of the measuring body (y-direction) are prevented between the transmitting units and the foundation plates and that the foundation plates are provided with holding means (51, 52, 55, 56) connecting these with the ends of the measuring body.

6. Load transmitting device as claimed in claim 4, **characterized** in that the transmitting units (37, 38) are maintained in force transmitting position to foundation plates (41, 42), that these are placed against the contact surfaces of the transmitting units not facing the measuring body (32), that these contact surfaces have guiding means in the form of opposite holes (14, 15) in both the surfaces with hole depths adapted to be filled with one half a ball-shaped body (13) so that transversal movements (x- and z-direction, respectively) and turning around the longitudinal axis of the measuring body (y-direction) are prevented between the transmitting units and the foundation plates and that the foundation plates are provided with holding means (51, 52, 55, 56) connecting these with the ends of the measuring body.

7. Load transmitting device as claimed in claim 5 or 6, **characterized** in that the holding means consist of split washers (51, 52, 55, 56) with central holes (50) adapted so that the washer parts can be pushed in from the sides in recesses (47, 48) around the end parts of the measuring body, that the washers are attached to the foundation plates (41, 42) by means of screws (59, 60, 61, 62) and that the division of the washers is made so that one end of the parts can be swung out in its plane and enables in this way mounting and removing of the measuring body and the transmitting units.

8. Load transmitting device as claimed in claim 5 or 7, **characterized** in that two of the opposite screws (61) holding the washers in position are extended towards the centre of the force transmitting means so that the screws from the extended ends opposite to each foundation plate indicate the relative positions of the plates perpendicularly to the measuring direction in the x- and z-directions.

9. Load transmitting device as claimed in claim 8, **characterized** in that there is a nut (65) on each pair of extended screws (61) that can be turned to a position connecting the opposite screw ends and arresting in this way the force transmitting means.

10. Load transmitting device as claimed in claim 8, **characterized** in that there is a nut on each pair of extended screws (61) with an outer conical end (66) and an opposite nut with an inner conical end (65), that the nuts can be turned towards each other to a position so that the ends of the extended screws are removed from one another and enable in this way mounting and removing of the measuring body and the transmitting units after being taken into operation.

**Patentansprüche**

1. Kraftübertragungseinrichtung zum elektromechanischen Messen von Kräften und Gewichten, welche einen Kraftmeßkörper (1), welcher im wesentlichen ebene, parallele Endebenen (2,3) hat, und eine zylindrische Übertragungseinheit (4,5) an jeder Endebene (2,3) des Meßkörpers (1) aufweist, wobei die Einheiten dazu bestimmt sind, die Kraft und die Gegenkraft in den Meßkörper (1) einzuleiten und gleichzeitig eine Bewegung und eine Winkeländerung der Kompressionsbelastung zuzulassen, wobei jede Übertragungseinheit einen zylindrischen Körper (4,5) aufweist, dessen Längsachse (x-x und z-z, jeweils) parallel zu der Endebene (2,3) des Meßkörpers (1) ist, dadurch **gekennzeichnet**, daß die Endebenen der Übertragungseinheiten (4,5), sowohl jene, die die Kontaktflächen gegenüber dem Meßkörper (1) bilden, als auch die gegenüberliegenden, eine im wesentlichen kreisförmige, mit einer einzigen Krümmung versehene Form haben, während zugeordnete Radien (R) größer als die halbe Länge der Übertragungseinheit in Richtung der Kraftübertragung (y-y) sind, und daß die Längsachsen (x-x und z-z, jeweils) der Übertragungseinheiten (4,5) senkrecht zueinander an der jeweiligen Endebene (2,3) des Meßkörpers (1) angeordnet sind.

2. Kraftübertragungseinrichtung nach Anspruch 1, dadurch gekennzeichnet, daß die Kontaktflächen der Übertragungseinheiten (7,8) und die Endebenen des Meßkörpers (6) mit Führungseinrichtungen in Form von Stiften (19) in einer Fläche und hierzu passende Öffnungen (20) in der anderen Fläche derart versehen sind, daß Querbewegungen (x- und z-Richtung) und ein Drehen um die Längsachse (y-Richtung) des Meßkörpers zwischen den Übertragungseinheiten und dem Meßkörper verhindert werden.

3. Kraftübertragungseinrichtung nach Anspruch 1, dadurch gekennzeichnet, daß die Kontaktflächen der Übertragungseinheiten (7,8) und die Endebenen des Meßkörpers (6) mit Führungseinrichtungen in Form von gegenüberliegenden Öffnungen (14,15) in beiden Flächen versehen sind, wobei die Öffnungstiefen derart gewählt sind, daß sie von einer Hälfte eines kugelförmigen Körpers (13) derart aufgefüllt sind, daß Querbewegungen (x- und z-Richtung, jeweils) und ein Verdrehen um die Längsachse (y-Richtung) des Meßkörpers zwischen den Übertragungseinheiten und dem Meßkörper verhindert werden.

4. Kraftübertragungseinrichtung nach einem der vorangehenden Ansprüche, dadurch gekennzeichnet, daß die Endebenen der Übertragungseinheiten, sowohl jene, welche die Kontaktflächen gegenüber dem Meßkörper bilden, als auch die gegenüberliegenden, eine Form mit einer einzigen Krümmung haben, welche längs des Teils des Umfanges kreisförmig ist, welcher in Kontakt mit der gegenüberliegenden Fläche innerhalb des Bereiches des Schwenkwinkels (27) der Übertragungseinheiten kommt, und daß die Form geradlinig (28) in Richtung der Tangente auf die Seiten außerhalb des Kontaktbereiches ist.

5. Kraftübertragungseinrichtung nach einem der vorangehenden Ansprüche, dadurch gekennzeichnet, daß die Übertragungseinheiten (37, 38) in einer Kraftübertragungsposition zu Grundplatten (41, 42) gehalten sind, daß diese gegen die Kontaktflächen der Übertragungseinheiten gelegt werden, welche nicht zu dem Meßkörper (32) weisen, daß diese beiden Kontaktflächen Führungseinrichtungen in Form von Stiften (22) in einer Fläche und Öffnungen (23) in der anderen Fläche derart haben, daß Querbewegungen (x- und z-Richtung, jeweils) und ein Verdrehen um die Längsachse des Meßkörpers (y-Richtung) zwischen den Übertragungseinheiten und den Grundplatten verhindert werden, und daß die Grundplatten mit Halteeinrichtungen (51, 52, 55, 56) versehen sind, welche dieselben mit den Enden des Meßkörpers verbinden.

6. Kraftübertragungseinrichtung nach Anspruch 4, dadurch gekennzeichnet, daß die Übertragungseinheiten (37,38) in einer Kraftübertragungsposition zu Grundplatten (41,42) gehalten sind, daß diese gegen die Kontaktflächen der Übertragungseinheiten anliegen, welche nicht dem Meßkörper (32) zugewandt sind, daß diese Kontaktflächen Führungseinrichtungen in Form von gegenüberliegenden Öffnungen (14,15) in den beiden Flächen haben, wobei die Öffnungstiefen derart gewählt sind, daß sie mit einer Hälfte eines kugelförmigen Körpers (13) derart ausgefüllt sind, daß Querbewegungen (x- und z-Richtung, jeweils) und ein Verdrehen um die Längsachse des Meßkörpers (y-Richtung) zwischen den Übertragungseinheiten und den Grundplatten verhindert werden, und daß die Grundplatten mit Halteeinrichtungen (51, 52, 55, 56) versehen sind, welche diese mit den Enden des Meßkörpers verbinden.

7. Kraftübertragungseinrichtung nach Anspruch 5 oder 6, dadurch gekennzeichnet, daß die Halteeinrichtungen geteilte Unterlagscheiben (51,52,55,56) mit Mittelöffnungen (50) aufweisen, welche derart beschaffen und ausgelegt sind, daß die Unterlagteile in Form der Seiten in Ausnehmungen (47,48) um die Endteile des Meßkörpers drückbar sind, daß die Unterlagscheiben an den Grundplatten (41,42) mit Hilfe von Schrauben (59,60,61,62) angebracht sind, und daß die Unterteilung der Unterlagscheiben derart erfolgt, daß ein Ende der Teile in der zugeordneten Ebene nach außen geschwenkt werden kann und hierdurch ermöglicht wird, daß der Meßkörper und die Übertragungseinheiten montiert und demontiert werden können.

8. Kraftübertragungseinrichtung nach Anspruch 5 oder 7, dadurch gekennzeichnet, daß zwei der gegenüberliegenden Schrauben (61), welche die Unterlagscheibe an Ort und Stelle halten, in Richtung auf die Mitte der Kraftübertragungseinrichtung derart verlängert sind, daß die Schrauben, ausgehend von den verlängerten Enden, die der jeweiligen Grundplatte gegenüberliegen, die relativen Positionen der Platten senkrecht zur Meßrichtung in den x- und z-Richtungen angeben.

9. Kraftübertragungseinrichtung nach Anspruch 8, dadurch gekennzeichnet, daß eine Mutter (65) auf jedem Paar von verlängerten Schrauben (61) vorgesehen ist, welche in eine Position gedreht werden kann, in welcher die gegenüberliegenden Schraubenenden verbunden sind, wodurch auf diese Weise die Kraftübertragungseinrichtung arretiert wird.

10. Kraftübertragungseinrichtung nach Anspruch 8, dadurch gekennzeichnet, daß eine Mutter auf jedem Paar von verlängerten Schrauben (61) mit einem äußeren konischen Ende (66) und eine gegenüberliegende Mutter mit einem inneren, konischen Ende (65) versehen sind, und daß die Muttern aufeinander zu in eine Position derart gedreht werden können, daß die Enden der verlängerten Schrauben voneinander lösbar sind und hierdurch ermöglicht wird, daß der Meßkörper und die Übertragungseinheiten nach dem Funktionsbetrieb montiert und demontiert werden können.

## Revendications

1. Dispositif de transmission de charge pour une mesure électromécanique de forces et de poids, comprenant un corps de mesure de charge (1) ayant des plans d'extrémité parallèles, sensiblement plans (2,3) et une unité de transmission cylindrique (4,5) à chaque plan d'extrémité (2,3) du corps de mesure (1), unités qui sont destinées à guider la force et la contre - force dans les corps de mesure (1) et à permettre en même temps un mouvement et une variation angulaire de la charge de compression, de façon à ce que chaque unité de transmission comprenne un corps cylindrique (4,5) avec son axe longitudinal (respectivement X-X et Z-Z) parallèle au plan d'extrémité (2,3) du corps de mesure (1), caractérisé en ce que les plans d'extrémités des unités de transmission (4,5), celles-ci formant à la fois des surfaces contact avec le corps de mesure (1) et les surfaces opposées, comportent une forme à une seule courbure, sensiblement circulaire avec leurs rayons respectifs (R) supérieurs à la longueur de la demi unité de transmission dans la direction de la transmission de la force (Y-Y) et en ce que les axes longitudinaux (X-X et Z-Z, respectivement) des unités de transmission (4,5) sont disposés perpendiculairement l'un à l'autre au niveau de chaque plan d'extrémité (2,3) du corps de mesure (1).

2. Dispositif de transmission de charge selon la revendication 1, caractérisé en ce que les surfaces de contact des unités de transmission (7,8) et les plans d'extrémité du corps de mesure (6) sont prévus avec des moyens de guidage sous la forme d'ergots (19) dans une surface et de trous (20) s'ajustant à ceux-ci dans l'autre surface de sorte que les mouvements transversaux (directions X et Z) et la rotation autour de l'axe longitudinal (direction Y) du corps de mesure sont évités entre les unités de transmission et le corps de mesure.

3. Dispositif de transmission de charge selon la revendication 1, caractérisé en ce que les surfaces de contact des unités de transmission (7,8) et les plans d'extrémité du corps de mesure (6) sont prévus avec des moyens de guidage sous la forme de trous opposés (14, 15) dans les deux surfaces avec des profondeurs de trou adaptées pour être remplies par une moitié d'un corps en forme de bille (13) de sorte que les mouvements transversaux (respectivement directions X et Y) et la rotation autour de l'axe longitudinal (direction Y) du corps de mesure sont évités entre les unités de transmission et le corps de mesure.

4. Dispositif de transmission de charge selon l'une quelconque des revendications précédentes, caractérisé en ce que les plans d'extrémité des unités de transmission, ces deux plans formant les surfaces de contact avec les corps de mesure et les surfaces opposées, ont une forme à une seule courbe qui est circulaire le long de la partie de la périphérie se situant en contact avec la surface opposée dans le domaine de l'angle d'oscillation (27) des unités de transmission et en ce que la forme est rectiligne (28) dans la direction de la tangente vers les côtés extérieurs audit domaine de contact.

5. Dispositif de transmission de charge selon l'une quelconque des revendications précédentes, caractérisé en ce que les unités de transmission (37,38) sont maintenues dans une position de transmission de force aux plaques de base (41, 42), en ce que celles-ci sont placées contre les surfaces de contact des unités de transmission ne faisant pas face au corps de mesure (32), en ce que ces deux surfaces de contact possèdent des moyens de guidage sous la forme d'ergots (22) dans une surface et de trous (23) dans l'autre surface de sorte que des mouvements transversaux (respectivement, directions X et Z) et une rotation autour de l'axe longitudinal (direction Y) sont évités entre les unités de transmission et les plaques de base et que les plaques de base sont équipées de moyens de support (51,52,55,56) reliant celles-ci aux extrémités du corps de mesure.

6. Dispositif de transmission de charge selon la revendication 4, caractérisé en ce que les unités de transmission (37,38) sont maintenues en position de transmission de force aux plaques de base (41,42), en ce que ces dernières sont placées contre les surfaces de contact des unités de transmission ne faisant pas face au corps de mesure (32), en ce que ces surfaces de contact possèdent des moyens de guidage sous la forme de trous opposés (14,15) dans les deux surfaces avec des profondeurs de trou adaptées pour être remplies par une moitié d'un corps en forme de bille (13) de sorte que les mouvements transversaux (respectivement, en direction X et Y) et une rotation autour de l'axe longitudinal du corps de mesure (direction Y) sont évités entre les unités de transmission et les plaques de base et en ce que les plaques de base sont équipées de moyens de support (51, 52, 55, 56) reliant celles-ci aux extrémités du corps de mesure.

7. Dispositif de transmission de charge selon la revendication 5 ou 6, caractérisé en ce que les moyens de support consistent en rondelles séparables (51, 52, 55, 56) avec des trous centraux (50) adaptées de façon à ce que les parties de rondelle puissent être poussées à partir des côtés dans les évidements (47, 48) autour des parties d'extrémité du corps de mesure, en ce que les rondelles sont fixées aux plaques de base (41,42) au moyen de vis (59, 60, 61, 62) et en ce que la séparation des rondelles est faite de sorte qu'une extrémité des parties puisse être basculée dans son plan et permettre de cette façon le montage et le démontage du corps de mesure et des unités de transmission.

8. Dispositif de transfert de charge selon la revendication 5 ou 7, caractérisé en ce que deux des vis opposées (61) maintenant les rondelles en position s'étendent vers le centre des moyens de transmission de force de sorte que les vis à partir des extrémités prolongées opposées à chaque plaque de base indiquent les positions relatives des plaques perpendiculairement à la direction de mesure dans les directions X et Z.

9. Dispositif de transmission de charge selon la revendication 8 caractérisé en ce que il y a un écrou (65) sur chaque paire de vis prolongées (61) qui peut être tourné vers une position connectant les extrémités de vis opposées et bloquant de cette manière les moyens de transmission de force.

10. Dispositif de transmission de charge selon la revendication 8 caractérisé en ce que il y a un écrou sur chaque paire de vis prolongées (61) avec une extrémité conique vers l'extérieur (66) et un écrou opposé avec une extrémité conique vers l'intérieur (65), en ce que les écrous peuvent être tournés l'un vers l'autre vers une position de sorte que les extrémités de vis prolongées sont déplacées l'une de l'autre et permettent ainsi le montage et le démontage du corps de mesure et des unités de transmission après avoir été mis en fonctionnement.

Fig. 1

Fig. 2

Fig. 3

Fig. 4

Fig. 5

Fig. 6

Fig. 7

Fig. 8

Fig. 9

Fig. 10